# EUROPEAN PATENT APPLICATION

(11) **EP 1 739 061 A1**
(43) Date of publication of application: **03.01.2007**
(21) Application number: 06115932.3
(22) Date of filing: 23.06.2006
(51) Int. Cl.: C02F 1/32

(54) **Dissolved ozone decomposing apparatus**

(30) Priority: 30.06.2005 JP 2005192571
(71) Applicant: Toflo Corporation, Hino-shi, Tokyo 191-0041 (JP)
(72) Inventor: Shimomura, Satoru c/o Toflo Corporation, Tokyo 191-0041 (JP); Nakashima, Kenshi c/o Toflo Corporation, Tokyo 191-0041 (JP); Matsusako, Akira c/o Toflo Corporation, Tokyo 091-0041 (JP)
(74) Representative: Hengelhaupt, Jürgen

(57) **Abstract**

A dissolved ozone decomposing apparatus comprising a case (2) and a first decomposing column (30) and a second decomposing column (40) in the case. The first decomposing column (30) comprises a flow pipe (31) in communication with a supply port (21), an adjustment plate (35) fixed in the flow pipe (31), a protection pipe (32) provided in the flow pipe (31) and made of a material transparent to ultraviolet rays, and a ultraviolet lamp (33) housed in the protection pipe (32). The second decomposing column (40) comprises a sub-tank (41) in communication with the flow pipe (31) and a drain port (22).

## Description

### BACKGROUND OF THE INVENTION

### Field of the Invention

The present invention relates to a dissolved ozone decomposing apparatus which is used to decompose dissolved ozone in ozone water when the ozone water is discarded generally after being used in semiconductor manufacturing processes or liquid crystal substrate manufacturing processes.

### Description of the Related Art

Conventionally, in a wafer processing step of semiconductor manufacturing process, organic matter which was attached to a surface of a silicon wafer is removed by cleaning, for example, with ozone water which is made of pure water containing ozone gas dissolved therein. Oxidizing power of ozone water is so strong that the organic matter can be well removed without using chemicals, while, if the ozone water is discarded after the cleaning as it is, piping of various equipment will be corroded. So, in discarding the used ozone water, the ozone dissolved in the ozone water needs to be decomposed to obtain pure water which can be drained. Conventionally, in order to decompose dissolved ozone in ozone water, for example a dissolved ozone decomposing apparatus which had been filed by the applicants of the present invention has been used (see Japanese Registered Utility Model No. 3068405 publication).

The apparatus disclosed in the above publication utilizes ultraviolet rays to decompose dissolved ozone, and comprises a case, a flow pipe in the case through which ozone water flows, and a plurality of ultraviolet lamps arranged around the flow pipe. When ozone water flows through the flow pipe, ultraviolet rays are irradiated to the ozone water by the ultraviolet lamps to decompose the dissolved ozone in the ozone water.

The conventional dissolved ozone decomposing apparatus, however, has a plurality of expensive ultraviolet lamps arranged to apply ultraviolet rays effectively to ozone water in the flow pipe, therein, there has been a problem of increased manufacturing cost. This apparatus also has another problem that when high flow rate or high concentration ozone water is subjected to a decomposition process, a larger size of flow pipe and more number of ultraviolet lamps are required, which results in a larger size of apparatus and further increased manufacturing cost.

The present invention was made to solve the above and other problems, and one object of the present invention is to provide a dissolved ozone decomposing apparatus which can efficiently decompose high flow rate or high concentration ozone water, featuring a compact design without increasing manufacturing cost.

### SUMMARY OF THE INVENTION

To achieve the above object, the first aspect of this application provides a dissolved ozone decomposing apparatus, having a case and a decomposing column in the case, in which ozone water flows from a supply port of the case into the decomposing column where dissolved ozone in the ozone water is decomposed, and the liquid after the decomposition flows out from a drain port of the case, wherein the decomposing column comprising: a flow pipe having an inlet in communication with the above supply port and an outlet in communication with the above drain port; a water flow adjustment mechanism to adjust a flow of the ozone water through the above flow pipe; a protection pipe which is disposed in the above flow pipe and is made of a material such as quartz transparent to ultraviolet rays; and an ultraviolet lamp which is housed in the above protection pipe and irradiates ultraviolet rays to the ozone water flowing through the above flow pipe, the above water flow adjustment mechanism being configured to partially block the passage of the ozone water flowing through the above flow pipe by arranging an adjustment plate having a partially notched disk-like shape in the above flow pipe.

Also to achieve the same object, the second aspect of this application provides a dissolved ozone decomposing apparatus, having a case, and a first decomposing column and a second decomposing column in the case, in which ozone water flows from a supply port of the case into the each decomposing column where dissolved ozone in the ozone water is decomposed, and the ozone-decomposed water flows out from a drain port of the case, wherein the above first decomposing column comprising: a flow pipe having an inlet in communication with the above supply port and an outlet; a water flow adjustment mechanism to adjust a flow of the ozone water through the above flow pipe; a protection pipe which is disposed in the above flow pipe and is made of a material such as quartz transparent to ultraviolet rays; and an ultraviolet lamp which is housed in the above protection pipe and irradiates ultraviolet rays to the ozone water flowing through the above flow pipe, the above second decomposing column comprising a sub-tank which has an inlet in communication with the above outlet of the above flow pipe in communication with the above drain port, and temporarily storing the ozone-decomposed water that has passed through the above flow pipe, and the above water flow adjustment mechanism being configured to partially block the passage of the ozone water flowing through the above flow pipe by arranging an adjustment plate having a partially notched disk-like shape in the above flow pipe.

In the above first aspect and the second aspect, as an example of the above water flow adjustment mechanism, an adjustment plate having a disk-like shape which is partially notched may be arranged in the above flow pipe to partially block the passage of the ozone water flowing through the above flow pipe, so that the flow of the ozone water through the flow pipe can be adjusted. The above supply port may be provided at a lower position than that of the above drain port, which allows the time of period during which the ozone water in the decomposing column stays therein to be extended by taking advantage of the elevation of the ozone water surface.

In addition, in the above first aspect and the second aspect, a supporting cover may be attached to the outer circumferential surface of the above flow pipe which blocks the ultraviolet rays irradiated by the above ultraviolet lamp and also has strength to withstand the internal pressure of the ozone water flowing through the above flow pipe. In this case, it is desirable that the above supporting cover has an inner circumferential surface treated to reflect the ultraviolet rays which have transmitted through the above flow pipe.

A protection pipe of a material transparent to the ultraviolet rays having a wavelength range of 200 to 300 nm enables the ultraviolet rays which have transmitted through the protection pipe to be reliably irradiated to the ozone water in the flow pipe, which improves the efficiency of ozone decomposition.

When acid ozone water including hydrogen fluoride aqueous solution is subjected to the decomposition process, the above protection pipe is desirably made of sapphire because a quartz pipe will be corroded by the hydrogen fluoride.

A plurality of the dissolved ozone decomposing apparatuses described above maybe used as a unit. For example, by connecting the supply ports of the apparatuses to a common supply pipe in parallel and connecting the drain ports of the apparatuses to a common drain pipe in parallel, higher flow rate ozone water can be accommodated for the decomposition process. Alternatively, by sequentially connecting a drain port of one apparatus to the supply port of the adjacent apparatus in serial, with the supply port of the head apparatus being connected to a common supply pipe and the drain port of the rear end apparatus being connected to a common drain pipe, higher concentration ozone water can be accommodated for the decomposition process.

According to the dissolved ozone decomposing apparatus of the present invention, because an adjustment plate which adjusts the flow of ozone water is arranged in a flow pipe of a decomposing column, the ozone water, after flowing into the flow pipe, strikes the adjustment plate in flowing through the flow pipe, and this prevents a shortcut phenomenon of the ozone water flowing from inlet to outlet of the flow pipe in a short time of period. As a result, the ozone water stays in the flow pipe so that decomposition reactions by ultraviolet rays can be promoted, which enables the process for decomposing dissolved ozone in the ozone water to be efficiently performed without increasing the size of flow pipes or the number of ultraviolet lamps.

When a second decomposing column of a sub-tank is disposed downstream of the first decomposing column in which ultraviolet rays are irradiated, a chain-reaction between the active radicals produced after the decomposition by ultraviolet rays and the ozone occurs in the sub-tank, and the remained ozone in the ozone-decomposed water will be further decomposed, resulting in that higher purity water can be drained.

Moreover, a configuration having a plurality of the first decomposing columns and the second decomposing columns coupled each other, or a configuration having a plurality of the apparatuses as a unit to be connected to a common piping in parallel or serial allows higher flow rate ozone or higher concentration ozone water to be accommodated for the decomposition process.

### BRIEF DESCRIPTION OF THE DRAWINGS

FIG. 1A is an external front view to show a structure of a dissolved ozone decomposing apparatus of Example 1;
FIG. 1B is an external left side view to show a structure of the dissolved ozone decomposing apparatus of Example 1;
FIG. 1C is an external rear view to show a structure of the dissolved ozone decomposing apparatus of Example 1;
FIG. 2 is a longitudinal cross sectional view to show an inner structure of the apparatus of FIG. 1;
FIG. 3A is an enlarged front view to show a structure of a decomposing column in the apparatus of FIG. 1;
FIG. 3B is an enlarged cross sectional view taken along the line A-A to show a structure of a decomposing column in the apparatus of FIG. 1;
FIG. 3C is an enlarged cross sectional view taken along the line B-B to show a structure of a decomposing column in the apparatus of FIG. 1;
FIG. 3D is an enlarged exploded view to show an adjustment plate;
FIG. 3E is an enlarged exploded view to show a rod;
FIG. 4 is an exploded view to show a modified example of the adjustment plate of FIG. 3;
FIG. 5 is a partial cross sectional view to show a fixing structure of a decomposing column in the apparatus of FIG. 1;
FIG. 6A is an external front view to show a structure of a dissolved ozone decomposing apparatus of Example 2;
FIG. 6B is an external left side view to show a structure of the dissolved ozone decomposing apparatus of Example 2;
FIG. 6C is an external rear view to show a structure of the dissolved ozone decomposing apparatus of Example 2;
FIG. 7 is a longitudinal cross sectional diagram to show an inner structure of the device of FIG. 6;
FIG. 8 is an external view to show a structure of a dissolved ozone decomposing apparatus of Example 3;
FIG. 9A is a cross sectional view to show a parallel connection structure of a dissolved ozone decomposing apparatus of Example 4; and
FIG. 9B is a cross sectional view to show a serial connection structure of the dissolved ozone decomposing apparatus of Example 4.

### DETAILED DESCRIPTION OF THE PREFERRED EMBODIMENTS

Now, the present invention will be described in detail by way of examples with reference to the accompanying drawings.

### [Example 1]

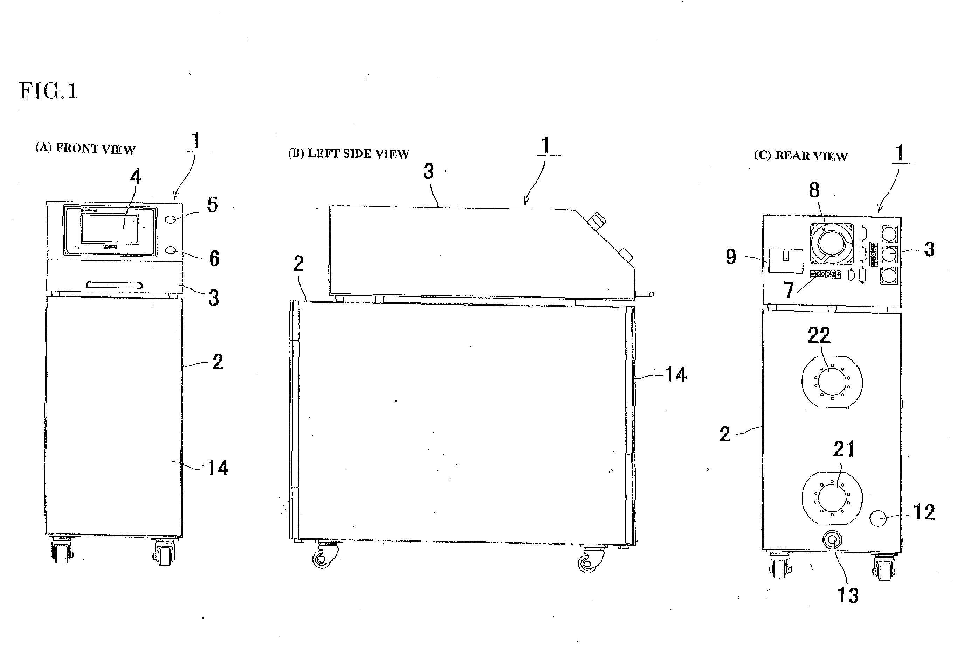

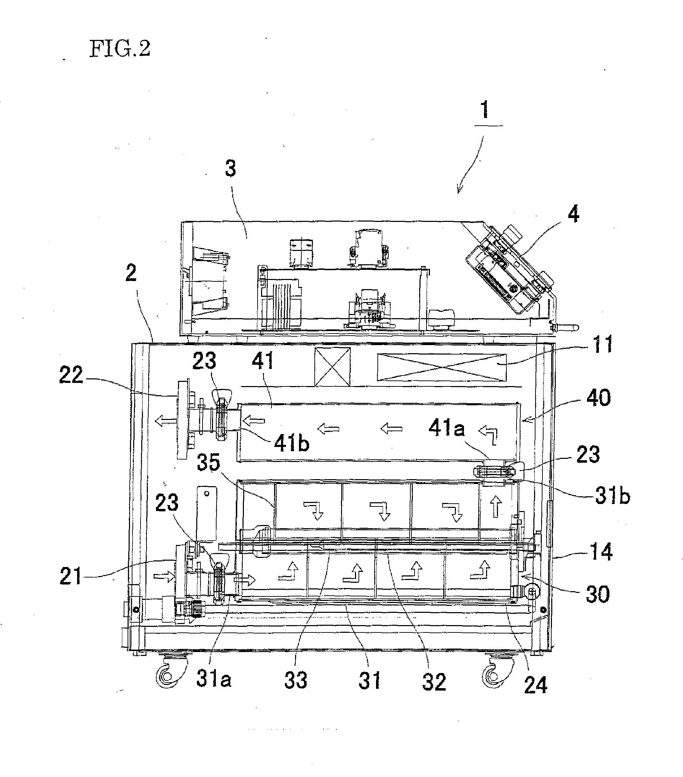

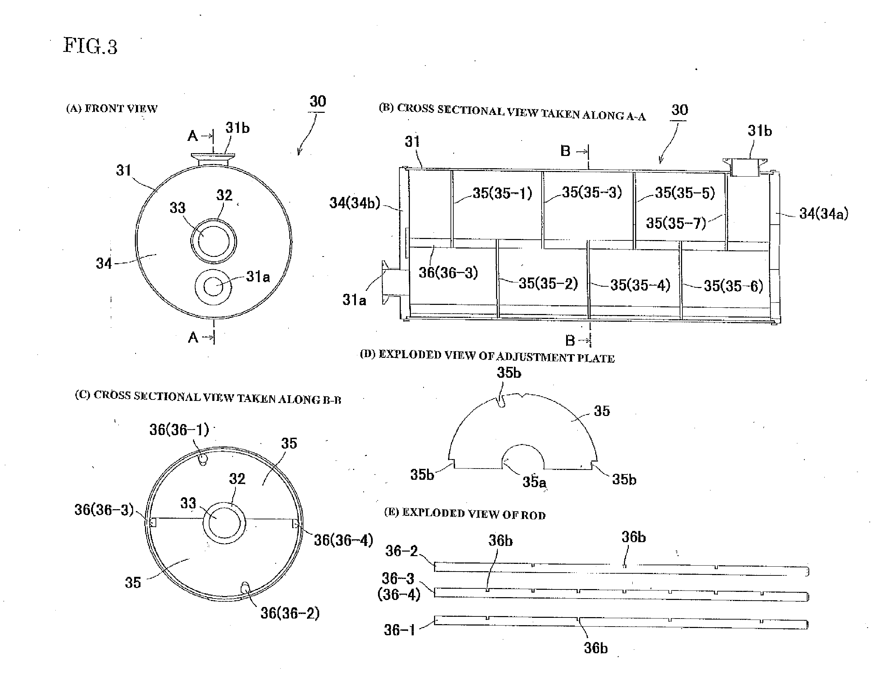

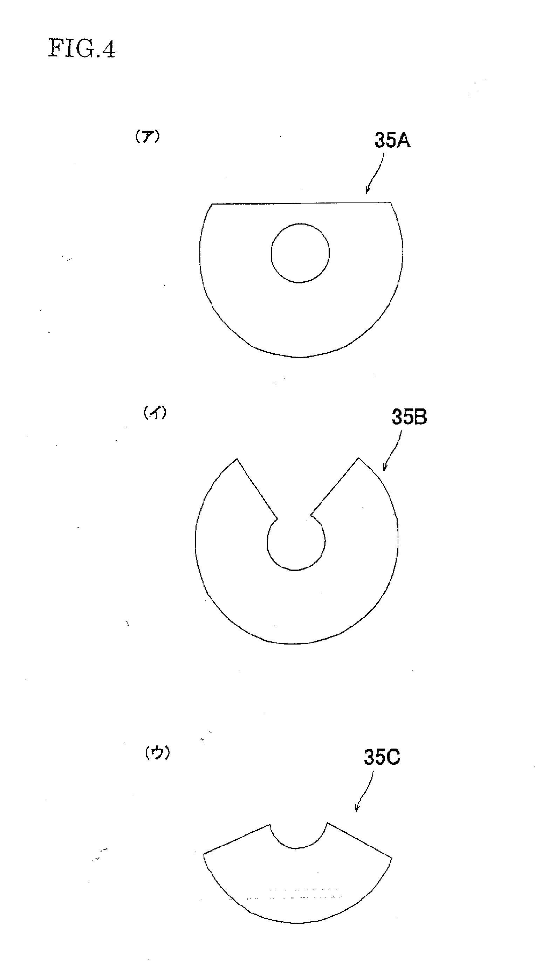

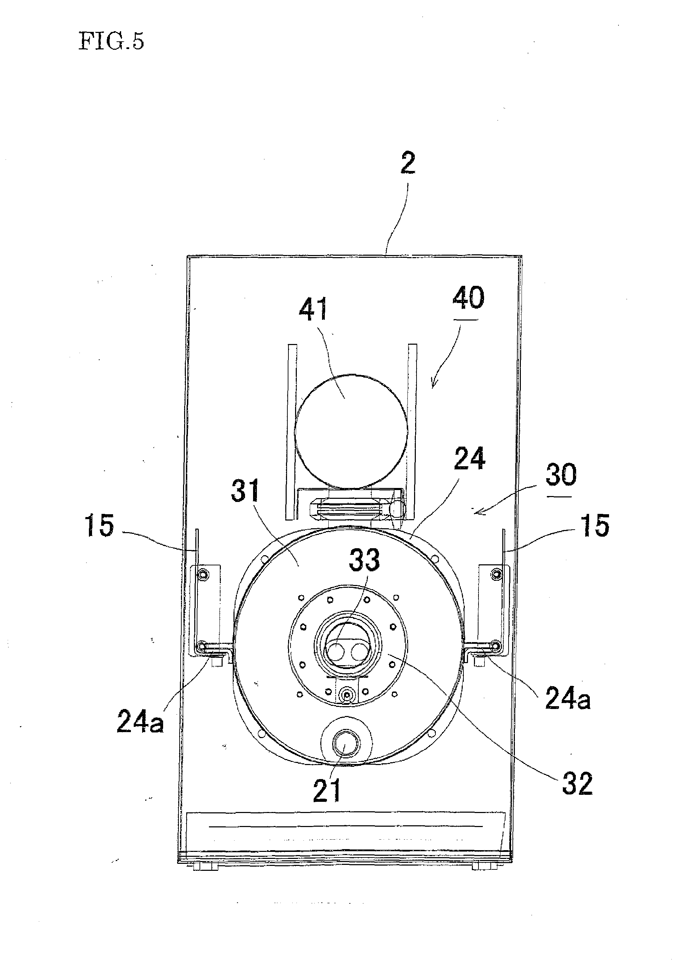

FIGS. 1A to 1C are external views to show a structure of a dissolved ozone decomposing apparatus of Example 1, FIG. 2 is a cross sectional view to show an inner structure of the apparatus of FIG. 1, FIGS. 3A to 3E are enlarged views to show a structure of a decomposing column in the apparatus, FIG. 4 is an explodedview to show a modified example of an adjustment plate, and FIG. 5 is a partial cross sectional view to show a fixing structure of a decomposing column.

A dissolved ozone decomposing apparatus 1 of this example is used to process ozone water used in cleaning organic matter on a silicon wafer surface for decomposition, and to drain the obtained pure water after the decomposition, for example in a wafer processing step in semiconductor manufacturing processes. As an example to use the apparatus 1, the dissolved ozone decomposing apparatus 1 may be arranged downstream of a cleaning apparatus connected to an ozone generator, and a pure water reproducing system or the like may be arranged downstream of the apparatus 1 so as to establish a pure water recycling system.

First, as shown in FIG. 1, the dissolved ozone decomposing apparatus 1 generally includes a case 2, a controller section 3 on the case, and a touch panel 4 provided to the controller section 3, and an operation of the touch panel 4 controls a process for decomposing ozone water via a power source controlling substrate 11 which is incorporated in the case 2. In addition to the touch panel 4, an emergency stop switch 5 and an incoming lamp 6 are provided to the front side of the controller section 3, and a power source connecting terminal block 7, an exhaust fan 8, and an earth leakage breaker 9 are mounted to a back side of the controller section 3. In the case 2, a decomposing column which performs a process for decomposing ozone water is installed, and a supply port 21 is opened at a lower part of the back side of the case 2, and a drain port 22 is opened at an upper part of the back side of the case 2, so that the supply port 21 is located at a lower position than the drain port 22. Reference numeral 12 designates drain piping for a decomposing column which is installed in the case 2, and reference numeral 13 designates drain piping for a vat which is installed at the bottom of the case 2.

Next, the inner structure of the dissolved ozone decomposing apparatus 1 will be explained in detail. As shown in FIG. 2, a decomposing column is installed in the case 2 to decompose dissolved ozone in ozone water, but this example has a configuration provided with two decomposing columns as a combination which will be explained below.

### [First Decomposing Column]

Reference numeral 30 in FIG. 2 designates a first decomposing column. The first decomposing column 30 is an "ultraviolet ray irradiation style" decomposing column in which ultraviolet rays are irradiated to ozone water for ozone decomposition, and includes a flow pipe 31, a protection pipe 32, and an ultraviolet lamp 33. The flow pipe 31 is transversely disposed in the case 2, and has two ends which are sealed with lids 34a and 34b. The lid 34b on the rear end is formed with an inlet 31a therein, and an outlet 31b is formed on an upper end of the front side of the flow pipe 31. The inlet 31a of the flow pipe is in communication with a supply port 21, and the outlet 31b of the flow pipe is in communication with an inlet 41a of a sub-tank which will be explained below. The supply port 21 and the flow pipe 31, and the flow pipe 31 and the sub-tank 41 are respectively coupled to each other by a joint 23 such as sanitary clamp fitting, flange joint, and union joint to enhance sealing property thereof. Being in contact with liquids, the flow pipe 31 and the lids 34 are made of polytetrafluoroethylene (PTFE) which has an excellent chemical resistance. Alternatively, only the parts in contact with liquids may be treated with fluorocarbon resin.

In the center of the flow pipe 31 is provided with a protection pipe 32 which has a diameter smaller than that of the flow pipe 31, and the protection pipe 32 is supported by the lids 34 at the both ends thereof. The protection pipe 32 is made of a material which has a high transmittance to ultraviolet rays and transmits the ultraviolet rays in a wavelength range of 200 to 300 nm that is known for decomposing ozone. In this example, a quartz pipe high transparent to ultraviolet rays, especially in a wavelength range around 253.7 nm is used.

An ultraviolet lamp 33 is housed in the protection pipe 32, and because the flow pipe 31 is transversely disposed in this example, the ultraviolet lamp 33 can be readily accessed by opening a front door 14 of the case 2 and pulling the ultraviolet lamp 33 housed in the protection pipe 32 out of the case, which makes the replacement of ultraviolet lamps 33 easy.

The first decomposing column 30 is featured by a water flow adjustment mechanism which is disposed in the flow pipe 31 to adjust the flow of ozone water in the flow pipe 31. The water flow adjustment mechani sm may be configured in many ways, and in this example, with the flow pipe 31 being transversely disposed, adjustment plates 35 having a half disk-like shape are alternately arranged upward and downward along the direction in which ozone water flows through the flow pipe 31. In particular, seven adjustment plates 35 (35-1 to 35-7) are fit in four rods 36 (36-1 to 36-4), and the rods 36 with the plates 35 are inserted in the flow pipe 31 to be fixed there.

The adjustment plate 35 shown in FIG. 3D has a center where a notch 35a is formed to pass the above protection pipe 32 through, and a circumferential edge along which three grooves 35b are formed to fit the rods 36 in. The rods 36 are shown in FIG. 3E, and, among the rods 36, the upper rod 36-1 has four grooves 36b formed therein which fit in the grooves in the adjustment plate 35, the lower rod 36-2 has three grooves 36b formed therein, the left and right rods 36-3 and 36-4 have seven grooves 36b formed therein. Four adjustment plates 35 to be mounted in the upper side 35-1, 35-3, 35-5, 35-7 are fit in every other grooves 36b in the upper rod 36-1 and the left and right rods 36-3 and 36-4, and are fixed there. And three adjustment plates 35 to be mounted in the lower side 35-2, 35-4, 35-6 are fit in remained every other grooves 36b in the lower rod 36-2 and the left and right rods 36-3 and 36-4. These adjustment plates 35 and rods 36 are inserted into the flow pipe 31 and are fixed with lids 34. This configuration makes the adjustment plates 35 alternately arranged upward and downward along the longitudinal direction of the flow pipe 31. Both of the adjustment plates 35 and the rods 36 will be in contact with liquid, and so are made of polytetrafluoroethylene (PTFE).

The shape of the adjustment plate 35 is not limited to half disk as described above, and it may be a disk shape having a notch such as the adjustment plates 35A, 35B, and 35C shown in FIG. 4. The shape may be conveniently selected to have the most appropriate surface area depending on the flow rate of the ozone water flowing through the flow pipe 31, that is, the inner diameter or length of the flow pipe 31, and alternatively, adjustment plates having different shapes may be used in combination.

As shown in FIG. 5, the flow pipe 31 is configured to have a supporting cover 24 attached to the outer circumferential surface thereof. The supporting cover 24 blocks the ultraviolet rays irradiated by the ultraviolet lamp 33 and has strength to withstand the internal pressure of ozone water flowing through the flow pipe 31. In this example, an SUS pipe is divided into two halves to cover the flow pipe 31 from the top and bottom and sandwich it therebetween. The SUS pipe has flanges 24a on its both sides, and after the sandwiching, the flanges 24a are threadedly mounted to mounting members 15 which are secured to the case 2 so as to integrally fix the two SUS pipe halves and the flow pipe 31. The supporting cover 24 has an inner circumferential surface mirror-polished to reflect the ultraviolet rays which has transmitted through the flow pipe 31, in order to enhance the efficiency of ozone decomposition in the flow pipe 31.

The configuration of the first decomposing column 30 has been described above, and now the operation will be explained with reference to FIG. 2. FIG. 2 shows the flow of ozone water and ozone-decomposed water by outlined arrows. First, ozone water is used in a cleaning apparatus, and the used ozone water flows through the supply port 21 from the inlet 31a into the flow pipe 31. When a certain amount of the ozone water is collected in the flow pipe 31, the ultraviolet lamp 33 is lighted by operating the touch panel 4 of the controller section 3. Then the ultraviolet lamp 33 emits ultraviolet rays, which are irradiated through the protection pipe 32 to the ozone water flowing through the flow pipe 31. This causes the ultraviolet rays in a wavelength range for decomposing ozone among the ultraviolet rays and the ozone water to react to each other, and a process for decomposing ozone is performed. The decomposing mechanism is said to be as follows:

(A) O₃ + H₂O + hν → O₂ + H₂O₂

(B) H₂O₂ + hν → 2HO·

(C) O₃ + H₂O + hν → O₂ + 2HO·

As shown in the above (A), the reaction between ozone water (O₃ + H₂O) and light energy (hν) causes ozone (O₃) to be decomposed to produce oxygen (O₂), and then active oxygen (O⁻) and water (H₂O) react to each other, whichproduces hydrogen peroxide (H₂O₂). The produced hydrogen peroxide (H₂O₂) further reacts with light energy (hν), as shown in the above (B), which produces active hydroxyl radical (HO·). Meanwhile, the reaction between ozone water (O₃ + H₂O) and light energy (hν), as shown in the above (C), causes ozone (O₃) to be decomposed to produce oxygen (O₂), and then active oxygen (O⁻) and water (H₂O) react to each other, which also produces hydroxyl radical (HO·).

In this way, in the process for decomposing ozone in the first decomposing column 30, ozone is decomposed by ultraviolet rays. Andbecause, in the flow pipe 31 of the first decomposing column 30, the adjustment plates 35 are alternately arranged upward and downward along the direction in which the ozone water flows as described above, the ozone water which flows into from the inlet 31a of the flow pipe goes forward striking the adjustment plates 35 one by one as shown in FIG. 2, so that it exits the outlet 31b to the second decomposing column 40. This eliminates a shortcut phenomenon of the ozone water flowing from the inlet 31a to the outlet 31b of the flow pipe in a short time of period, and the ozone water stays in the flow pipe 31, which promotes the above decomposition reaction and enables the process for decomposing dissolved ozone in the ozone water to be efficiently performed.

### [Second Decomposing Column]

Reference numeral 40 in FIG. 2 designates a second decomposing column. The second decomposing column 40 is a "self decomposition style" decomposing column in which the ozone-decomposed water passed through the first decomposing column 30 is temporarily stored for further ozone decomposition reaction, and is configured to include a sub-tank 41. The sub-tank 41 is transversely mounted on the flow pipe 31, with an inlet 41a being opened at the lower end of the front side of the sub-tank 41, and an outlet 41b being opened in the rear side of the sub-tank 41. The inlet 41a of the sub-tank is in communication with the outlet 31b of the flow pipe, and the outlet 41b of the sub-tank is in communication with the drain port 22. The flow pipe 31 and the sub-tank 41, and the sub-tank 41 and the drain port 22 are respectively coupled to each other by a joint 23 such as sanitary clamp fitting to prevent leaking. The sub-tank 41 is also desirably made of polytetrafluoroethylene (PTFE) as with the flow pipe 31.

The configuration of the second decomposing column 40 has been described above, and now the operation will be explained. As shown in FIG. 2, The water ozone-decomposed by ultraviolet rays in the above first decomposing column 30 flows from the inlet 41a of the sub-tank which is coupled with the outlet 31b of the flow pipe into the sub-tank 41. After flowing into the sub-tank 41, the water is subjected to a further decomposition process, and drained from the outlet 41b of the sub-tank through a drain out port 22. The decomposing mechanism in the sub-tank 41 is said to be as follows:

(D) HO·+ O₃ → HO₂ + O₂

(E) HO₂ + O₃ → HO· + 2O₂

When there remains ozone (O₃) in the water ozone-composed by ultraviolet rays, the ozone (O₃) reacts with the hydroxyl radical (HO·) which was produced in the above reaction formulas (B) and (C). Because the hydroxyl radical (HO·) is so active that it reacts with ozone (O₃) to be stable as shown in the above reaction formula (D), the ozone (O₃) is decomposed and produces oxygen (O₂), which again produces new hydroperoxyl radical (HO₂·). The produced hydroperoxyl radical (HO₂·) is also so active that it reacts with ozone (O₃) and decomposes the ozone (O₃) as shown in the above reaction formula (E), which again produces hydroxyl radical (HO·). This produced hydroxyl radical (HO·) also repeats the reaction with ozone (O₃) as shown in the above reaction formula (D).

In this way, in the ozone decomposition process in the second decomposing column 40, as described above, a chain reaction by active radicals which includes a reaction between hydroxyl radical (HO·) and ozone → a reaction between hydroperoxyl radical (HO₂·) and ozone → a reaction between hydroxyl radical (HO·) and ozone occurs, and this promotes the self decomposition of the ozone remained in the water. Thus, the water after passing through the second decomposing column 40 approaches the level of pure water with more dissolved ozone being decomposed, and this high purity water is drained from the outlet 41b of the sub-tank through the drain port 22 to the outside of the dissolved ozone decomposing apparatus 1.

As described above, the dissolved ozone decomposing apparatus 1 in this example decomposes the dissolved ozone in ozone water by a synergy of the decomposition using ultraviolet rays in the first decomposing column 30 and the self decomposition using the chain reaction of active radicals in the second decomposing column 40. As a result, the dissolved ozone decomposing apparatus 1, featuring a compact design without increasing manufacturing cost, can efficiently decompose high flow rate or high concentration ozone water and drain it as high purity water without increasing the size of a flow pipe or the number of ultraviolet lamps to enhance the efficiency of ozone decomposition as in the case of a conventional apparatus.

In this example, a quartz pipe is used for the protection pipe 32 to house ultraviolet lamps 33 therein, but when ozone water containing hydrogen fluoride aqueous solution is subjected to the decomposition process, as the hydrogen fluoride corrodes the quartz, a sapphire pipe instead of a quartz one is desirably used.

### [Example 2]

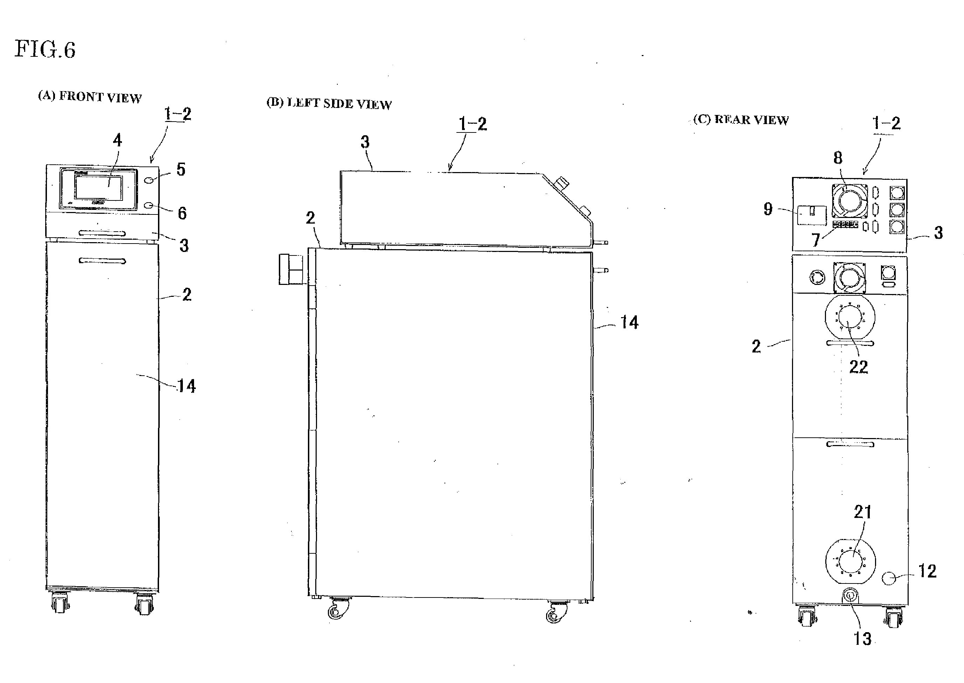

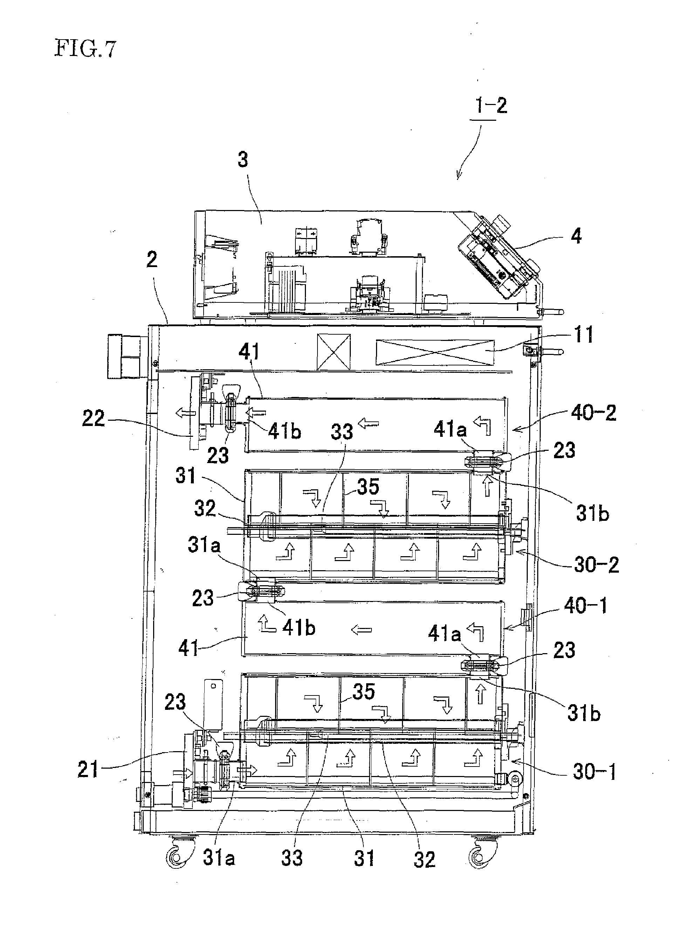

FIGS. 6A to 6C are external rear views to show a structure of a dissolved ozone decomposing apparatus of Example 2, and FIG. 7 is a cross sectional diagram to show an inner structure of the apparatus. In this example, elements similar to those described in Example 1 are assigned the same reference numerals, and such elements will not be described in detail below.

As shown in FIGS. 6A to 6C, a dissolved ozone decomposing apparatus 1-2 in this example is featured by a case 2 having a greater height than that of the apparatus 1 in Example 1 so that the flow rate of ozone water to be subjected to the decomposition process can be increased. Similar to Example 1, a decomposing column is disposed in the case 2 to decompose dissolved ozone in ozone water, but in this example, two first decomposing columns 30 and two second decomposing columns 40 are superimposed on in the vertical direction of the case 2, and four decomposing columns are provided in total.

As shown in FIG. 7, in the lower first decomposing column 30-1, an inlet 31a of a flow pipe is in communication with a supply port 21 similar to Example 1, but an outlet 41b of a sub-tank in the second decomposing column 40-1 is open at an upper end of a rear side of the column, which is different from that in Example 1. Also, in the upper first decomposing column 30-2, an inlet 31a of a flow pipe is open at a lower end of a rear side of the column, and in the upper second decomposing column 40-2, an outlet 41b of a sub-tank is in communication with a drain port 22. The supply port 21 and the flow pipe 31, and the flow pipe 31 and the sub-tank 41, and the sub-tank 41 and the drain port 22 are respectively coupled to each other by a joint 23 such as sanitary clamp fitting to prevent leaking. Other elements of the lower first decomposing column 30-1 and second decomposing column 40-1 and the upper first decomposing column 30-2 and second decomposing column 40-2 are similar to those in Example 1.

Similar to Example 1, as the dissolved ozone decomposing apparatus 1-2 in this example decomposes the dissolved ozone in ozone water by a synergy of the decomposition mechanism using ultraviolet rays and the self decomposition mechanism using the chain reaction of active radicals, high flow rate or high concentration ozone water can be efficiently decomposed. In addition, in this example, due to the configuration further having the first decomposing column 30-2 and the second decomposing column 40-2 mounted on the lower second decomposing column 40-1, another decomposition process is performed on the water from the lower sub-tank 41-1 by using the ultraviolet rays irradiation and the chain reaction of active radicals, so that higher flow rate or higher concentration ozone water can be accommodated for the decomposition process, and higher purity water can be drained from the drain port 22.

### [Example 3]

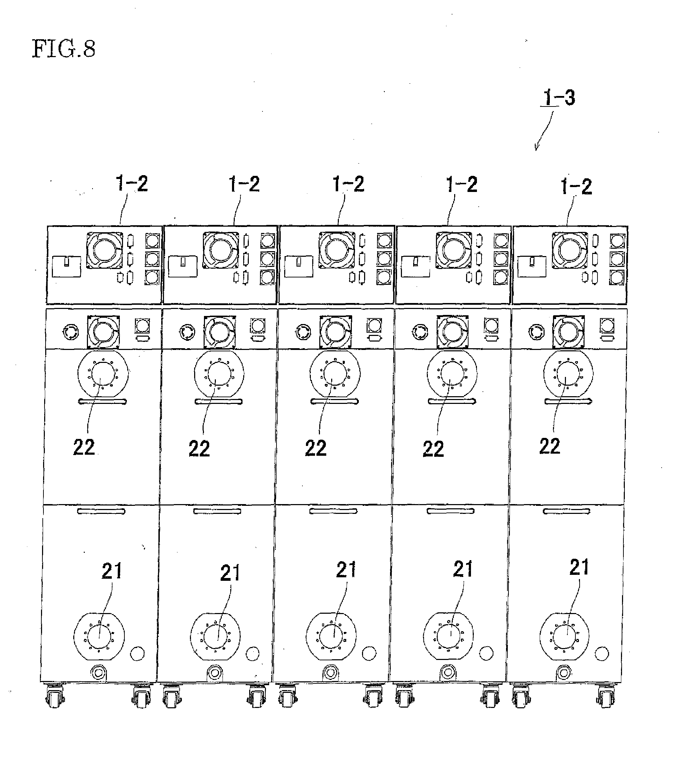

FIG. 8 is an external view to show a structure of a dis solved ozone decomposing apparatus of Example 3. In this example, elements similar to those described in above examples are assigned the same reference numerals, and such elements will not be described in detail below.

As shown in FIG. 7, a dissolved ozone decomposing apparatus 1-3 in this example has a feature that five dissolved ozone decomposing apparatuses 1-2 of Example 2 are arranged in a line across the case 2 and are coupled to each other as a unit to be connected to a common central piping, so that the flow rate of ozone water to be decomposed is further increased. Similar to Example 2, in the case 2 of each dissolved ozone decomposing apparatus 1-2, two first decomposing columns 30 and two second decomposing columns 40 are respectively superimposed on and coupled to each other in the vertical direction of the case 2, and four decomposing columns are provided in total. In this example, a manifold configuration (a pipe having multiple apertures) is used in which the supply ports 21 of the five apparatuses 1-2 are connected to a common supply pipe in parallel, and also, the drain ports 22 of the apparatuses are connected to a common drain pipe in parallel.

According to the dissolved ozone decomposing apparatus 1-3 of this example, even when a large amount of ozone water flows into the supply pipe at once, the ozone water is divided into each supply port 21, is separately decomposed in each apparatus 1-2, and is drained from each drain port 22 to a drain pipe. Thus, the dissolved ozone decomposing apparatus 1-3 of this example is preferable for a decomposition process on higher flow rate ozone water. The number of apparatuses 1-2 and decomposing columns 30, 40 in each apparatus 1-2 may be, though not illustrated, conveniently changed depending on a flow rate or concentration of ozone water to be decomposed. Also, a supply port 21 of one apparatus and a drain port 22 of the adjacent apparatus may be connected in serial to decompose high concentration ozone water.

### [Example 4]

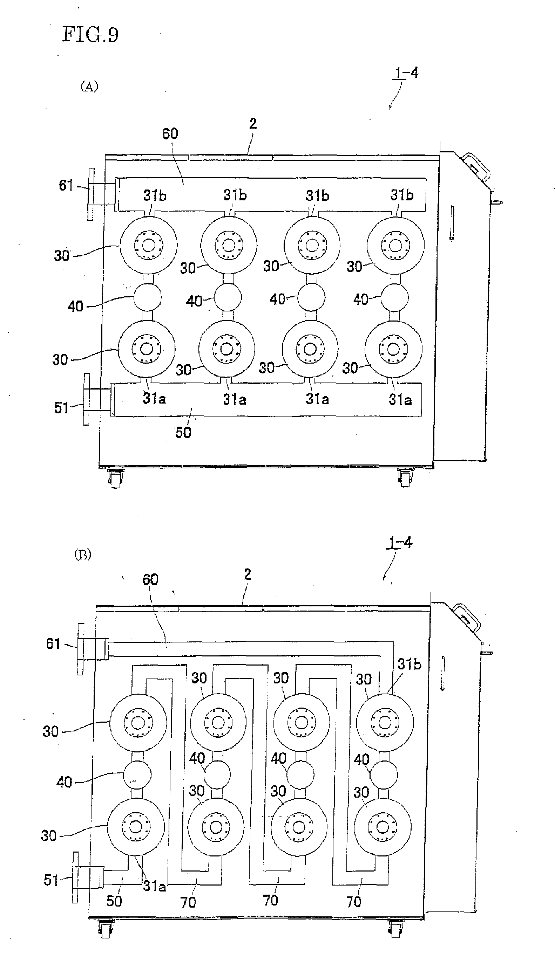

FIGS. 9A to 9B are cross sectional views to show a structure of a dissolved ozone decomposing apparatus of Example 4. In this example, elements similar to those described in above examples are assigned the same reference numerals, and such elements will not be described in detail below.

A dissolved ozone decomposing apparatus 1-4 in this example has a feature that a plurality of decomposing columns are provided in a case 2 which are connected to a common central piping so that high flow rate or high concentration ozone water can be decomposed.

FIG. 9A shows an example of a plurality of decomposing columns connected in parallel. The case 2 includes four units therein, and each unit has a configuration in which a first decomposing column 30, a second decomposing column 40, and another first decomposing column 30 are coupled in series, and inlets 31a of head flow pipes in the units are connected to a common supply pipe 50 in parallel, and similarly outlets 31b of rear end flow pipes in the units are connected to a common drain pipe 60 in parallel. A supply port 51 of the supply pipe 50 and a drain port 61 of the drain pipe 60 are respectively coupled to an external piping of the apparatus 1-4.

According to such an example of parallel connection, ozone water supplied from the supply port 51 to the supply pipe 50 is divided into the inlets 31a of the flow pipes in each unit, passes through the first decomposing column 30, the second decomposing column 40, and another first decomposing column 30 in serial to be decomposed, and is drained from the outlet 31b of the flow pipe of each unit to the drain pipe 60. Thus, high flow rate ozone water can be accommodated for the process at one time. And, because all what a user needs to do is to couple the supply port 51 and the drain port 61 to an external piping, piping work is easy.

On the contrary, FIG. 9B shows an example of a plurality of decomposing columns connected in serial. The case 2 includes eight first decomposing columns 30 and four second decomposing columns 40 therein, and the inlet 31a of a flow pipe in the first decomposing column 30 at the head is connected to a supply pipe 50, and the outlet 31b of a flow pipe in the first decomposing column 30 at the rear end is connected to a drain pipe 60, with adjacent decomposing columns being connected to each other in serial by coupling pipes 70. The supply port 51 of the supply pipe 50 and the drain port 61 of the drain pip 60 are coupled to an external piping of the apparatus 1-4 as in the parallel connection.

According to such an example of serial connection, ozone water supplied from the supply port 51 to the supply pipe 50 is drained to the drain pipe 60 after passing through all of the decomposing columns. This means the ozone water passes through the same number of decomposition processes by ultraviolet rays irradiation with that of the first decomposing columns 30, and the same number of self decomposition processes with that of the second decomposing columns 40, resulting in that higher concentration ozone water can be decomposed.

In this example, the supply pipe 50 and the drain pipe 60 are provided in the case 2, but these common central piping may be provided at the exterior of the case 2. Also, the number or arrangement of the first decomposing columns 30 and the second decomposing columns 40 may be conveniently changed depending on a flow rate or concentration of the ozone water to be decomposed.

## Claims

1. A dissolved ozone decomposing apparatus, having a case and a decomposing column in the case, in which ozone water flows through a supply port of the case into the decomposing column where dissolved ozone in the ozone water is decomposed, and the ozone-decomposed water flows out through a drain port of the case, wherein
the decomposing column comprising:
a flow pipe having an inlet in communication with the supply port and an outlet in communication with the drain port;
a water flow adjustment mechanism to adjust a flow of the ozone water through the flow pipe;
a protection pipe which is disposed in the flow pipe and is made of ultraviolet transmitting material such as quartz; and
an ultraviolet lamp which is housed in the protection pipe and irradiates ultraviolet rays to the ozone water flowing through the flow pipe, and
the water flow adjustment mechanism being configured to partially block the passage of the ozone water flowing through the flow pipe by arranging an adjustment plate having a partially notched disk-like shape in the flow pipe.

2. A dissolved ozone decomposing apparatus, having a case, and a first decomposing column and a second decomposing column in the case, in which ozone water flows from a supply port of the case into the each decomposing column where dissolved ozone in the ozone water is decomposed, and the ozone-decomposed water flows out through a drain port of the case, wherein
the first decomposing column comprising:
a flow pipe having an inlet in communication with the supply port;
a water flow adjustment mechanism to adjust a flow of the ozone water through the flow pipe;
a protection pipe which is disposed in the flow pipe and is made of ultraviolet transmitting material such as quartz; and
an ultraviolet lamp which is housed in the protection pipe and irradiates ultraviolet rays to the ozone water flowing through the flow pipe,
the second decomposing column comprising a sub-tank which has an inlet in communication with the outlet of the flow pipe and an outlet in communication with the drain port, and temporarily storing the ozone-decomposed water that has passed through the flow pipe, and
the water flow adjustment mechanism being configured to partially block the passage of the ozone water flowing through the flow pipe by arranging an adjustment plate having a partially notched disk-like shape in the flow pipe.

3. The dissolved ozone decomposing apparatus according to claim 1 or 2, wherein the supply port is provided at a lower position than that of the drain port.

4. The dissolved ozone decomposing apparatus according to claim 1 or 2, further comprising a supporting cover which is attached to an outer circumferential surface of the flow pipe and blocks the ultraviolet rays irradiated by the ultraviolet lamp and has strength to withstand the internal pressure of ozone water flowing through the flow pipe.

5. The dissolved ozone decomposing apparatus according to claim 4, wherein the supporting cover has an inner circumferential surface treated to reflect the ultraviolet rays which have transmitted through the flow pipe.

6. The dissolved ozone decomposing apparatus according to claim 1 or 2, wherein the protection pipe is made of ultraviolet transmitting material transmittable of 200 to 300 nm wavelength.

7. The dissolved ozone decomposing apparatus according to claim 1 or 2, wherein the protection pipe is made of sapphire.

8. A dissolved ozone decomposing apparatus, comprising a plurality of the dissolved ozone decomposing apparatuses according to claim 1 or 2 as a unit, with the supply ports of the apparatuses being connected to a common supply pipe in parallel and the drain ports of the apparatuses being connected to a common drain pipe in parallel.

9. A dissolved ozone decomposing apparatus, comprising a plurality of the dissolved ozone decomposing apparatuses according to claim 3 as a unit, with the supply ports of the apparatuses being connected to a common supply pipe in parallel and the drain ports of the apparatuses being connected to a common drain pipe in parallel.

10. A dissolved ozone decomposing apparatus, comprising a plurality of the dissolved ozone decomposing apparatuses according to claim 4 as a unit, with the supply ports of the apparatuses being connected to a common supply pipe in parallel and the drain ports of the apparatuses being connected to a common drain pipe in parallel.

11. A dissolved ozone decomposing apparatus, comprising a plurality of the dissolved ozone decomposing apparatuses according to claim 5 as a unit, with the supply ports of the apparatuses being connected to a common supply pipe in parallel and the drain ports of the apparatuses being connected to a common drain pipe in parallel.

12. A dissolved ozone decomposing apparatus, comprising a plurality of the dissolved ozone decomposing apparatuses according to claim 6 as a unit, with the supply ports of the apparatuses being connected to a common supply pipe in parallel and the drain ports of the apparatuses being connected to a common drain pipe in parallel.

13. A dissolved ozone decomposing apparatus, comprising a plurality of the dissolved ozone decomposing apparatuses according to claim 7 as a unit, with the supply ports of the apparatuses being connected to a common supply pipe in parallel and the drain ports of the apparatuses being connected to a common drain pipe in parallel.

14. A dissolved ozone decomposing apparatus, comprising a plurality of the dissolved ozone decomposing apparatuses according to claim 1 or 2 as a unit, with a drain port of one apparatus being sequentially connected to a supply port of the adjacent apparatus in serial, the supply port of the head apparatus being connected to a common supply pipe, and the drain port of the rear end apparatus being connected to a common drain pipe.

15. A dissolved ozone decomposing apparatus, comprising a plurality of the dissolved ozone decomposing apparatuses according to claim 3 as a unit, with a drain port of one apparatus being sequentially connected to a supply port of the adjacent apparatus in serial, the supply port of the head apparatus being connected to a common supply pipe, and the drain port of the rear end apparatus being connected to a common drain pipe.

16. A dissolved ozone decomposing apparatus, comprising a plurality of the dissolved ozone decomposing apparatuses according to claim 4 as a unit, with a drain port of one apparatus being sequentially connected to a supply port of the adjacent apparatus in serial, the supply port of the head apparatus being connected to a common supply pipe, and the drain port of the rear end apparatus being connected to a common drain pipe.

17. A dissolved ozone decomposing apparatus, comprising a plurality of the dissolved ozone decomposing apparatuses according to claim 5 as a unit, with a drain port of one apparatus being sequentially connected to a supply port of the adjacent apparatus in serial, the supply port of the head apparatus being connected to a common supply pipe, and the drain port of the rear end apparatus being connected to a common drain pipe.

18. A dissolved ozone decomposing apparatus, comprising a plurality of the dissolved ozone decomposing apparatuses according to claim 6 as a unit, with a drain port of one apparatus being sequentially connected to a supply port of the adjacent apparatus in serial, the supply port of the head apparatus being connected to a common supply pipe, and the drain port of the rear end apparatus being connected to a common drain pipe.

19. A dissolved ozone decomposing apparatus, comprising a plurality of the dissolved ozone decomposing apparatuses according to claim 7 as a unit, with a drain port of one apparatus being sequentially connected to a supply port of the adjacent apparatus in serial, the supply port of the head apparatus being connected to a common supply pipe, and the drain port of the rear end apparatus being connected to a common drain pipe.
